# EUROPEAN PATENT APPLICATION

(11) **EP 1 736 950 A1**
(43) Date of publication of application: **27.12.2006**
(21) Application number: 05728466.3
(22) Date of filing: 06.04.2005
(51) Int. Cl.: G09B 29/00

(54) **MAP DRAWING DEVICE, NAVIGATION DEVICE, FILE UPDATING METHOD, FILE UPDATING PROGRAM, AND INFORMATION RECORDING MEDIUM ON WHICH THE FILE UPDATING PROGRAM IS RECORDED**

(30) Priority: 13.04.2004 JP 2004117792
(71) Applicant: Pioneer Corporation, Tokyo 153-8654 (JP); Increment P Corporation, Tokyo 153-8665 (JP)
(72) Inventor: ADACHI, Keisuke; c/o Increment P Corporation,, 1-chome, Meguro-ku, Tokyo;1538665 (JP)
(74) Representative: Tappe, Hartmut
(86) International application number: PCT/JP2005/006769
(87) International publication number: WO 2005/101350

(57) **Abstract**

Reducing a time when a navigation apparatus cannot be used by an update operation of data for displaying map to thereby avoid vexatious complication of update process.

A navigation apparatus 100 reads out data for update from DVD in use of a DVD drive 106 to update data recorded in an HD for displaying map. In such the update, the navigation apparatus 100 precedently updates data corresponding to a map in the vicinity of a present position of vehicle, and simultaneously updates rest of the data in use of a vacant time of process.

## Description

### TECHNICAL FIELD

The present invention particularly relates to a technology of depicting a map in a navigation apparatus which searches a moving route of a movable body and presents the moving route to a user.

### BACKGROUND ART

There have been provided by now various navigation apparatuses, namely those equipped in a movable body such as a vehicle and provided to guide the movable body. Such the navigation apparatus has data for displaying a map recorded in it, in order to display a map related to a place subjected to route guide to show a present position of the movable body and a route to a destination of the movable body on a display device such as a liquid crystal display.

Further, in this type of the navigation apparatus, there is a navigation apparatus having a function of renewing data for displaying a map, recorded in a rewritable recording medium such as a hard disk (hereinafter referred to as "HD"), and also makes data for displaying a map, recorded in the navigation apparatus renew to be the newest data by overwriting the data recorded in the rewritable recording medium. (For example, Patent Document 1)
Patent Document 1: Japanese Unexamined Patent Publication 2002-197785.

### DISCLOSURE OF THE INVENTION

### Problems to be Solved by the Invention

Meanwhile, when the data for displaying map is renewed in an available navigation apparatus, it may be necessary to overwrite data. Therefore, during the renewal, the user cannot use various function of the navigation apparatus, and it is impossible to use the data for displaying the map. Especially, in an available navigation apparatus, since data for displaying map are formed and administrated as a single file, it takes a long time for renewing operation and a duration while the navigation apparatus is unusable becomes long.

The present invention is provided in consideration of the above situation and to provide a map depiction device, a navigation apparatus, a file renewing method, a file renewing program, and an information recording medium recording file renewing program.

In order to solve the above problem, according to a first aspect of the present application, there is provided a map depiction device according to claim 1 which generates map image data for displaying map and outputs the map image data thus generated to a display device in association with traveling of a movable body including:
a recording means having a map file containing map data provided for each of a plurality of areas, obtained by dividing an entire region to be displayed on a map, to thereby generate the map image data of an area corresponding to an own file, and a common file containing at least administration data for administrating the map data contained in the map file;
a present position data generating means for generating present position data indicative of at least a present position of the movable body;
a display control means for generating the map image data corresponding to a peripheral map of the present position, which is indicated by the present position data with use of the administration data and the map file, and outputting the map image data to the display device;
a detection means for detecting whether or not update of the map file is necessary;
a determining means for determining the map file to be updated on the basis of the present position data when it is detected such that the update of the map file is necessary; and
a file updating means which obtains the common file and the file data for update, corresponding to the map file determined by the determining means, and updates the common file and map file, which are recorded in the recording means, with use of the file data thus obtained after suspending process using the map file.

Further, according to another aspect of the present invention, there is provided a navigation apparatus according to Claim 10 having a map depiction device which generates map image data for displaying a map and outputs the map image data thus generated to a display device in association with traveling of a movable body including:
a recording means having a map file, which contains map data provided for each of a plurality of areas obtained by dividing an entire region to be displayed on a map to thereby generate the map image data of an area corresponding to an own file, and a common file, which contains at least administration data for administrating the map data contained in the map file;
a present position data generating means for generating present position data indicative of at least a present position of the movable body;
a setup means for setting up a destination;
a route setup means for setting up a route from the present position of the movable body to the destination;
a display control means for generating the map image data so that route guide information indicative of a route which is set up along with a peripheral map of the present position, indicated by the present position data, is displayed with use of the administration data and the map file, and outputting the map image data to the display device in use of the administration data and the map file;
a detection means for detecting whether or not update of the map file is necessary;
a determining means for determining the map file to be updated on the basis of the present position data when it is detected such that the update of the map file is detected to be necessary; and
a file updating means which obtains the common file and the file data for update, corresponding to the map file determined by the determining means, and updates the common file and map file, which are recorded in the recording means, with use of the file data thus obtained after suspending process using the map file.

Furthermore, according to another aspect of the present invention, there is provided a file update method according to Claim 11 in a map depiction device which generates map image data for displaying a map and outputs the map image data thus generated and has a recording medium that records a map file which is provided area by area and obtained by dividing an entire area to be displayed in a map to a plurality of the areas and includes map data for generating the map image data corresponding to the area corresponding to an own file, and administration data for administrating the map data which are contained in the map file, including steps of:
a first step of detecting whether or not update of the map file is necessary in the map depiction device;
a second step of generating present position data designating at least the present position of the movable body in the map depiction device;
a third step of determining the map file to be updated on the basis of the present position of the vehicle in the map depiction device; and
a forth step of obtaining the common file and the file data for update, corresponding to the map file determined in the third step, and updates the common file and map file, which are recorded in the recording means, with use of the file data thus obtained after suspending process using the map file.

Furthermore, according to another aspect of the present invention, there is provided a file update program according to Claim 12 for updating a plurality of files that are recorded in an information recording medium, the plurality of files being a map file containing map data provided for each of a plurality of areas, obtained by dividing an entire region to be displayed on a map, and a common file containing at least administration data for administrating the map data contained in the map file, the file update program being provided to update the map file and the common file with a computer, tangibly demonstrating function comprising steps of:
a present position data generating means for generating present position data indicative of at least a present position of a movable body;
a detection means for detecting whether or not update of the map file is necessary;
a determining means for determining the map file to be updated on the basis of the present position data when it is detected such that the update of the map file is necessary; and
a file updating means which obtains file data for update determined by the common file and the file data for update, corresponding to the map file determined by the determining means, and updates the common file and map file, which are recorded in the information recording means, with use of the file data thus obtained after suspending process using the map file.

Furthermore, according to another aspect of the present invention, an information recording medium according to claim 13 is provided to record a file renewing program recited in claim 12.

### Brief Explanation of Drawings

[Figure 1] A block diagram showing a structure of navigation apparatus 100 according to the Embodiment;
[Figure 2] A drawing showing a data structure of data recorded in HD of an HD drive 105 according to this embodiment;
[Figure 3] A flow chart showing a process conducted in a system control unit 115 of a navigation apparatus 100 according to this Embodiment;
[Figure 4] A flow chart showing a process conducted in a system control unit 115 of a navigation apparatus 100 according to this Embodiment.

### Explanation of Numerical References

CF···Common Map File
RF-k (k=1, 2, ···)···Regional Map File
100···Navigation Apparatus

### Best Mode for Carrying out the Invention

### [1] Embodiment

### [1.1] Structure of Embodiment

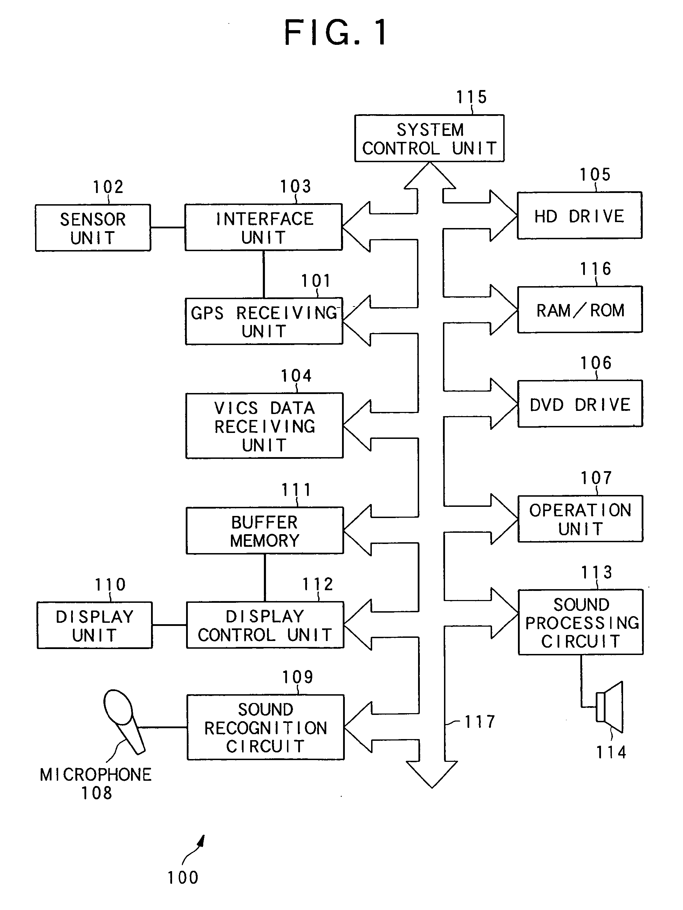

First, in reference of Figure 1, a structure of the navigation apparatus 100 according to this Embodiment will be described in reference of Figure 1.

As shown in this figure, the navigation device 100 according to this embodiment includes a GPS (Global Positioning System Receiver) 101, a sensor unit 102, an interface unit 103 (hereinafter "interface" is referred to as "I/F"), a VICS (Vehicle Information Communication System) data receiving unit 104, an HD (hard disk) drive 105, a DVD (Digital Versatile Disc) drive 106, an operation unit 107, a microphone 108, a sound recognition unit 109, a display unit 110, a buffer memory 111, a display control unit 112, a sound processing unit 113, a speaker 114, a system control unit 115, a ROM (Read Only Memory)/RAM (Random Access Memory) unit 116, and data bus 117 mutually connecting these elements.

The terminology "recording means" recited in "Scope of Claims" corresponds for example to "I/F unit 103", the terminology "display control means" corresponds for example to display control unit 112. Further, the terminologies "detection means" and "determining means" corresponds for example to the system control unit 115. The terminology "file renewing means" corresponds for example to the HD drive 105 and the system control unit 115.

The navigation apparatus 100 according to the embodiment is to realize a navigation function such as route guide for vehicle by recording data for display map into an HD of the HD drive 105 and making a map display on the display unit 110 which is configured by a displaying device such as a CRT (Cathode Ray Tube), an organic EL (Electro Luminescent), and a liquid crystal display panel. Further, in the navigation apparatus 100 according to the embodiment, data for displaying map, which are recorded in an HD, is renewed by reading data for renewal out of a DVD in use of the DVD drive 106.

Here, as described above, if it is tried to simultaneously renew all data for display map, a time necessary for renewal becomes long and the navigation apparatus cannot be used for a long time. On the contrary thereto, it is not always necessary for a user to simultaneously renew data. As long as a periphery of a present position of the user' own and a periphery of a destination are renewed, it is scarcely necessary to quickly renew other data in most cases. Therefore, in the navigation apparatus 100 according to this embodiment, by previously renewing data corresponding to a map in the vicinity of a present position of a vehicle and simultaneously renewing other data while using spare time of process in the navigation apparatus, a time required for data renewal is shortened and therefore a time duration while navigation apparatus 100 cannot be used can be shortened.

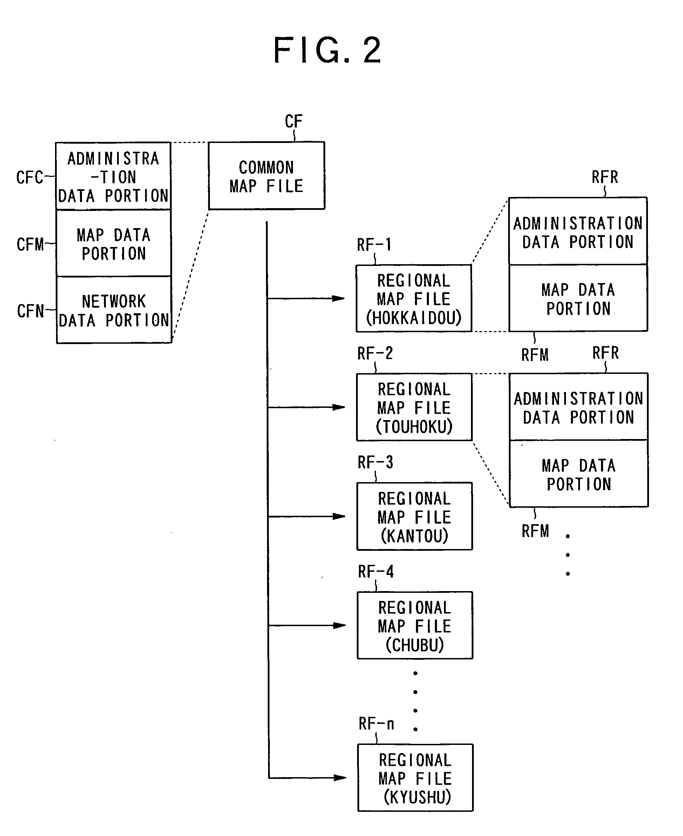

In order to realize such the function, the HD of the HD drive 105 according to the embodiment has data for display map, which are made up of a plurality of file groups as shown in Figure 2, recorded in it. As shown in Figure 2, the data for displaying map according to this embodiment is constituted by a plurality of file groups including a common map file CF and a regional map file RF-k(k=1,2,···,n).

Among these files CF and RF-k, the regional map file RF-k is provided with respect to areas which are obtained by dividing a region subjected to display of map in the navigation apparatus 100. For example, when the region to be displayed extends all around Japan, the whole of Japan is divided into HOKKAIDOU and other regions including a plurality of prefectures as a unit such as TOUHOKU, KANTOU, CHUBU, and KINKI to provide regional map files RF-k with respect to each of the regions.

Each of the regional map files RF-k is equipped with a map data portion RFM. The map data portion RFM includes map data for displaying an area map corresponding to an own file RF-k. For example, when the regional map file corresponds to the region of KANTOU, the map data portion RFM naturally includes map data for displaying a map of the region of KANTOU. The map data represent is data configured by polygon and polyline for displaying a background of map and roads, and data such as text data (hereinafter these are referred to as configuration data) . These configuration data are used to generate image data for displaying map on the display unit 110.

Meanwhile, the common map file CF is made as one file with respect to an entire area to be displayed in a map by the navigation apparatus 100, irrespective of a corresponding area of the regional map file RF-k. Further, the common map file CF includes a map data portion CFM having elements of map data in a manner similar to the above regional map file RF-k.

Here, a relationship of map data contained in the common map file CF and the regional map file RF-k according to the embodiment will be briefly described. First, in displaying a map, the smaller a reduction scale becomes, the larger a display area becomes, whereby a detailed background display is required. Also the smaller a reduction scale becomes, the larger a data amount becomes. In this embodiment, this relationship is focused on. For example, it is constructed such that when the map data corresponding to a map having a reduction scale of one over two thousand five hundred, which has a large amount of data, is handled, the map data are divided into the above-mentioned areas with respect to each area to make them retain by each of the regional map files RF-k, and when the map data corresponding to a map having a reduction scale larger than that is handled, the map data are retained by the common map file CF without dividing into each of the areas. Meanwhile, specific issues that which reduction scale is subject to allocation to the regional map file RF-k and how to divide the areas are arbitrarily determined.

Further, this map data are generated and administrated with respect each of the unit areas, called a standard parcel which is obtained by dicing an entire area of map. The map data corresponding to each of the standard parcels are administrated on the basis of parcel administration information contained in the administration data portions CFC and RFR of both of the files CF and RF-k. The parcel administration information are for example data containing an address for storing map data and data size corresponding each of the standard parcels.

Further, in this embodiment, the administration data portion CFC of the common map file CF includes a block administration record and a block set administration record to administrate map data which are contained in both of the common map file CF and the regional map file RF-k. Here, the block administration record is data for administrating the map data in units of block, being a group of the plurality of basic parcels. The block set administration record is data for administrating the map data in units of block set, being a group of the plurality of blocks.

In the navigation apparatus 100 according to the present embodiment, when a map is practically displayed on a navigation apparatus 100, the parcel administration information is specified on the basis of the block set administration record and the block administration record which are contained in the administration data portion CFC of the common map file CF. The map data are read out of an address contained in the parcel administration data to thereby generate image data.

Meanwhile, a method of concretely specifying a data structure and parcel administration information of the administration data portions CFC and RFR of the both of the files CF and RF-k can be arbitrarily determined. However, in this embodiment, for making explanation more specific, a record for administrating each of the parcel administration information pieces is provided in the administration data portion of the regional map file RF-k, and a pointer for designating the record inside the regional map file RF-k and a file name of the regional map file are stored inside the block administration record of the common map file CF. Then, when the parcel administration information is specified on the basis of on the block administration record, a record in correspondence with the regional map file RF-k corresponding to the file name contained in the block administration record is designated to thereby specify the parcel administration information.

On the other hand, the common map file CF has a network data portion CFN other than the above data. The network data portion CFN includes, for example, for example, (a) a road linkage and a node for showing an existing position of each road on maps corresponding to various reduction scales, (b) a linkage ID for identifying each road on the map, (c) data used in conducting map matching, (d) data used in setting up a route, and (e) a network data such as traffic condition of each road.

Here, the road linkage designates a plurality of straight lines to approximate each road. When the route setting up or the map matching are conducted in the navigation apparatus 100, the straight line is used to specify an existing position of each roads on the map. Further, a node designates an end point on both sides of each road linkage. By connecting each road linkages at nodes, the existing positions of each road are approximated on the map. Since an operation of conducting the route setting and the map matching is the same as that in a conventional navigation apparatus, a detailed description is omitted.

When the data for displaying the map are practically updated, among the file groups recorded inside the HD, the common map file, a regional map file RF-k corresponding to an area where the present position of the vehicle belongs or an area such as from the present position to the destination is updated in advance. Then when update of the file RF-k is completed, update of the rest of the regional map file RF-k is updated in consideration of an available time for processing in the system control unit 115.

Next, a structure of elements constituting the navigation apparatus 100 is respectively explained.

The GPS receiving unit 101 receives GPS radio wave emitted from a geodetic earth orbiting satellite, calculates latitude and longitude corresponding to a present position of a vehicle on the basis of the GPS radio wave emitted from the geodetic earth orbiting satellite, and outputs the latitude and longitude thus calculated as GPS data to an I/F unit 103.

The I/F unit 103 calculates the present position of the vehicle on the basis of traveling data inputted from the sensor unit 102 and GPS data inputted from the GPS receiving unit 101, and outputs own vehicle position data corresponding to the result of calculation to the system control unit 115. The VICS data receiving unit 104 receives radio wave such as VICS data contained in the radio wave and outputs it to the system control unit 115. The VICS designates a vehicle information and communication system. The VICS data designates vehicle information such as traffic snarl-up, traffic accident, and traffic regulation.

The operation unit 107 is constituted by a remote control device having various keys such as a numeric keypad and a cursor key, and a control signal corresponding to an input operation by a user (driver and passenger) is outputted. The sound recognition unit 109 receives speech sound which is uttered and inputted into a microphone 108. The sound recognition circuit 109 analyzes the speech sound thus inputted, recognizes the speech sound thus inputted, and outputs the control signal corresponding to the operation command to the system control unit 115.

The display control unit 112 receives map data that are read out of the HD drive 105. The display control unit 112 generates image data corresponding to a map on a buffer memory 111 on the basis of map data thus inputted under a control by the system control unit 115, reads out the image data thus generated at a predetermined timing, and display it on the display unit 110.

The sound processing unit 113 generates a sound signal under a control of system control unit 115, and the sound signal thus generated is propagated through a speaker 114. For example, according to the function of the sound processing unit 113, the navigation apparatus 100 according to the present embodiment notifies a heading direction of a vehicle in a next intersection or a condition of traffic snarl-up and closure to a user.

The system control unit 115 mainly made up of a CPU (central processing unit) and includes various input and output ports such as a GPS receiving port, a key input port, and a display control port, to thereby totally control an entire function of the navigation apparatus 100. In controlling as such, the system control unit 115 reads out a control program recorded in a ROM/RAM unit 116 to carry out various processes and temporarily retain data under processing in the ROM/RAM unit 116.

For example, when a route is guided, the system control unit 115 directly outputs a control signal to an HD drive 105, to thereby reading out data for displaying map and extract map data corresponding to a map including a position to be displayed. When the extraction of the map data is completed, the system control unit 115 carries out a map matching on the basis of own vehicle position data which are supplied from the map data and the I/F unit 103, sets up a route to a destination, set up from a present position, and simultaneously outputs the map data to the display control unit 112, to thereby control the display control unit 112 so that route guide information corresponding to the route thus set up are displayed on a map corresponding to a present position of the vehicle.

Further, when a predetermined input operation is done while a DVD having update data of data for displaying map recorded in it is equipped in the DVD drive 106, an update process of data for displaying map, which are recorded in the HD drive, is carried out by a process to be described below in detail.

### [1.2] Operation of the Embodiment

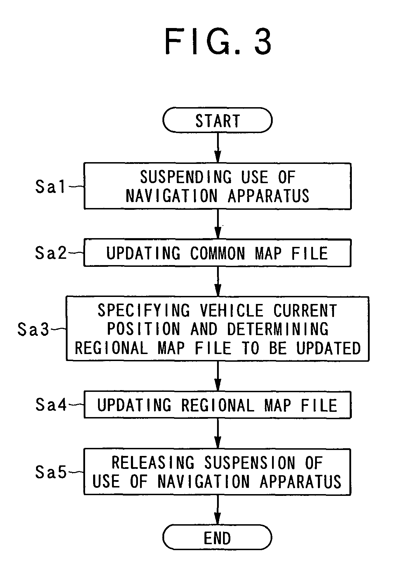

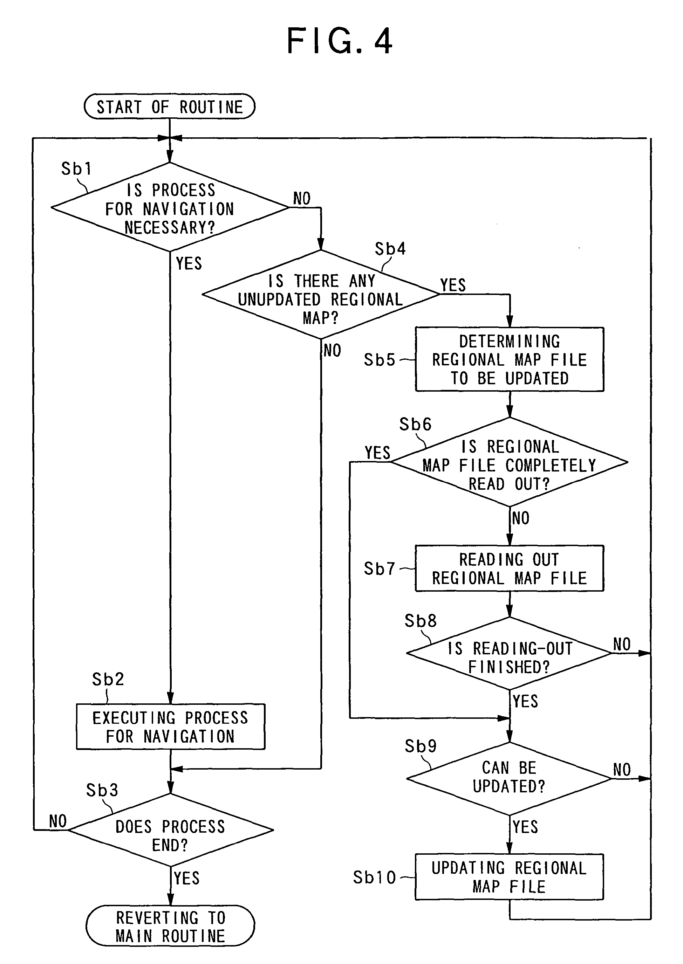

Here, an operation of updating data for displaying map, which are recorded in an HD, with the system control unit 115 in the navigation apparatus is specifically described. Figures 3 and 4 show flow charts of a process carried out by the system control unit 115 of the navigation apparatus 100 according to the present embodiment.

When an updating operation for data is conducted, a user first throw an electric power supply into the navigation apparatus to mount a DVD having data for update recorded in it on the DVD drive 106. In this situation, when the user does a predetermined input operation with respect to the operation unit 107, the system control unit 115 starts a process shown in Figure 3 so as to update a regional map file RF-k of an area where the present position of the vehicle belongs and a common map file CF.

In this process, the system control unit 115 first changes use of the navigation apparatus to a halt condition (Step Sa1). At this time, when if the system control unit 115 already carries out a process for navigation such as a route guide and a route setup, such the process is ended and it is transferred to a state that an input operation to the operation unit 107 is nullified.
At this time, the system control unit 115 outputs a control signal to the display control unit 112 and generates image data for displaying a character string such that "Since data for displaying map is now being updated, navigation apparatus cannot be used. Please wait a moment." on the display unit 110. As a result, the display unit 110 displays such the character string and the user is notified of that the use of the navigation apparatus 110 is in the halt condition.

Next, the system control unit 115 makes the common map file CF recorded in the DVD read out by outputting a control signal to the DVD drive 106, and overwrites and updates the common map file CF recorded in the HD drive 105 on the basis of the common map file CF thus read out (Step Sa2).

As such, when the update of the common map file is completed, the system control unit 115 determines a regional map file, the system control unit 115 determines a regional map file RF-k to be updated on the basis of positional data of the own vehicle which is supplied from the I/F unit 103 (Step Sa3) . At this time, a method that the system control unit 115 specifies a regional map file RF-k to be updated is arbitrary. For example, it is possible to determine the regional map file RF-k to be updated using the following method.

### <Method a>

The method is to make it a subject of update the regional map file RF-k of the area where the present position of vehicle belongs. According to the method, the system control unit 115 identify a present position of vehicle on the basis of positional data, identifies an area where the present position of the vehicle thus identified, and determines the regional map file RF-k corresponding to the area as a subject of update.

### <Method b>

This method is to determine a regional map file RF-k to be updated on the basis of a relationship between the present position of vehicle and area border lines of borders. Specifically,
(i) when a present position of vehicle is not within a predetermined distance range from area borders (for example within 10 km), the regional map file RF-k corresponding to an area where the present position of the vehicle belongs as a subject of update.
(ii) When the present position of vehicle is within a predetermined distance range from the area borders, the regional map file RF-k to be updated is determined in accordance with the following standard.
(Standard a) When the area border line exists in front of a traveling direction of the vehicle, at least a regional map file RF-k corresponding to an area where the present position of the vehicle belongs and a neighbor area existing in front of the traveling direction is determined as a a subject of update.

### <Method c>

This method is to determine the regional map file RF-k to be updated on the basis of a relationship between the present position of vehicle and area border lines of borders, in a manner similar to that in the above method b. However, according to the method, when the present position of the vehicle is within a distance range from an area border line, a menu for selecting a neighbor area to be updated is displayed on the display unit 110, and according to this display, it is possible to determine a regional map file RF-k of neighbor area, selected by a user, as a subject of update.

### <Method d>

This method is to determine a regional map file RF-k to de updated on the basis of a relationship between a present position of vehicle and a destination of vehicle. According to this method, the system control unit 115 previously sets up a destination and also sets up a route from the present position to the destination. The system control unit 115 specifies all areas existing on the route and determines the regional map file RF-k corresponding to the area thus specified as an object of update.

According to the above methods, when the regional map file RF-k is determined as a subject of update, the system control unit 115 outputs a control signal to the DVD drive 106 to make it read out a file RF-k for update pertaining to the regional map file RF-k to be updated, and updates the regional map file RF-k recorded in an HD by the file RF-k thus read out (Step Sa4). At this time, it can be arbitrarily determined which method is used. For example, it may be updated by overwriting the regional map file RF-k in the HD.

As such when the update of the regional map file and the common file CF is completed, the system control unit 115 releases the halt condition of using the navigation apparatus 100 (Step Sa5), and finishes the process. At this time, the system control unit 115 outputs a control signal to the display control unit 112 stops generation of image data for displaying a character string, and also releases a null condition of input operation.

After the above operations are completed and the navigation apparatus is ready for use, the system control unit 115 starts a process shown in Figure 4 so as to update an unrenewed regional map file RF-k in background. Meanwhile, the process is conducted by the system control unit 115 in a subroutine of control program.

In this process, the system control unit 115 first is in a state of judging whether or not a process for navigation such as a route setup and a route guide is necessary (Step Sb1). In this judgment, for example, when (a) various processes are not conducted, the system control unit judges "no". For example, when (b) various processes are conducted and a processing command is not inputted for a predetermined time, the system control unit 115 judges "no". On the contrary thereto, when the various processes are conducted and a command of processing such as a map matching is inputted, the system control unit 115 judges "yes" in Step Sb1.

When it is judged "yes" in this judgment, the system control unit 115 conducts a process for navigation so as to realize a currently using function (Step Sb2). Then it is in a state of judging whether or not an event of completing the process is inputted into the operation unit 107 (Step Sb3). In this step Sb2, the system control unit 115 conducts a map matching based on network data contained in the common map file CF to realize a route guide function, or extracts map data corresponding to a map in the vicinity of vehicle current position out of the map data units CFM and RFM of the common map file CF, and outputs the map data to the display control unit 112.

On the other hand, when it is judged "no" in Step Sb1, the system control unit 115 compares regional map files RF-k recorded in the HD with regional map files RF-k recorded in the DVD to judge whether or note an unrenewed one exists in the regional map files recorded in the HD (Step Sb4). When it is judged "no" in Step Sb4, the system control unit 115 conducts a process of Step Sb3.

On the contrary thereto, when it is judged "yes" in Step Sb4, the control unit 115 determines the regional map file RF-k to be updated. At this moment, it is arbitrary how the system control unit 115 determines the regional map file RF-k to be updated. For example , the following method may be employed.

### <Method A>

This method is to determine a regional map file which is not currently used as an object of update in the navigation apparatus 100. According to the method, it is detected whether or not there is a regional map file currently used. If there is any regional map file RF-k currently used, such the regional map file is excluded from the object of update. Meanwhile, when there is a plurality of regional map files RF-k which are not updated, it is arbitrary to update which file RF-k is updated earlier than the other files RF-k.

### <Method B>

This method is to precedently update an unupdated regional map file RF-k, corresponding to an area positioned closest to a present vehicle position. It is hard to imagine that a vehicle reaches within a short period of time to the nearest area in an occasion that a regional map file RF-k corresponding to an adjacent area is precedently updated when the vehicle exists within a predetermined distance range from a border of the areas. Meanwhile, the highest availability among the unupdated regional map files resides in the regional map file RF-k corresponding to the adjacent area. Therefore, the system control unit 115 specifies the present position of vehicle on the basis of own vehicle positional data supplied from the I/F unit 103, and determines the unupdated regional map file RF-k corresponding to the area closest to the present position as an object of update.

### <Method C>

This method is to display area names corresponding to the unupdated regional map files RF-k to a display unit 110 to make a user select one from among the regional map files RF-k to be updated.

As such when the regional map file RF-k to be updated is determined, the system control unit 115 judges whether readout of the regional map file RF-k to be updated is already completed (Step Sb6). As the result of judgment, when it is judged "no", the system control unit 115 outputs a control signal to a DVD drive 106 in order to read out the regional map file RF-k to be updated out of a DVD (Step Sb7). At this time, the system control unite 115 generates a temporary file on the HD , for example, based on data read out of the DVD.

Next, the system control unit 115 is in a state that the regional map f ile RF-k is completely read out to await judgment of whether or not generation of a temporary file on an HD is completed (Step Sb8). When if it is judged "no", Step Sb1 is again executed to judge whether or not a process for navigation is necessary.

Thereafter, Steps Sb1 to Sb8 are repeated. The regional map files RF-k for update are sequentially developed onto the HD in use of a time while a process for realizing carious functions are unnecessary. When all data of the regional map file RF-k for update is developed onto the HD, judgment in Step Sb8 becomes "yes". As such when the regional map file RF-k is copied on the HD as a temporary file, the system control unit 115 judges whether or not the unupdated regional map file RF-k is in a renewable state (Step Sb9). When it is judged "yes" in this judgment, the system control unit 115 repeats a process of Step Sb1 after updating the regional map file RF-k (Step Sb10) is updated.

At this moment, it is arbitrary determined whether or not renewal of the regional map file RF-k is conducted. For example, it may be possible to replace a file while changing a file name of the regional map file RF-k copied as a temporary file to a file name of the unupdated regional map file RF-k along with deletion of the unupdated regional map file RF-k recorded on the HD from the HD.

On the contrary thereto, for example, when the vehicle exists in an area corresponding to the regional map file RF-k to be updated and the regional map file RF-k is used for route guide and a route setup, it is impossible to update the regional map file RF-k. Accordingly, in such the case, the system control unit 115 judges "No" in Step Sb9, and a process of Step Sb1 is again conducted. Further, when the regional map file RF-k to be updated is already completely read out, the judgment in Step Sb6 is changed to "Yes" and Step Sb9 is judged while omitting processes of Sb7 and Sb8. When the regional map file to be updated is in a renewable state, the system control unit 115 judges "Yes" in Step Sb9, the regional map file RF-k is renewed (Step Sb10), and the process of Step Sb1 is repeated.

Thereafter, until the unupdated regional map files are completely extinguished, the above processes are repeated. Accordingly, all files forming data for displaying a map recorded in the HD are updated.

As such, the navigation apparatus 100 according to the present embodiment is made up of an HD in an HD drive 105 having a regional map file RF-k which is provided with respect to each area obtained by dividing an entire region as an object of display and includes map data for displaying an area corresponding to an own file, and a common map file including a control data portions CFC for administrating the map data contained in the regional map file, recorded in it; an I/F unit 103 for generating positional data of the own vehicle, which shows a present position of vehicle; a display control unit 112 for generating image data corresponding to a peripheral map of the present position of shown by the positional data of the own vehicle in use of data contained in the regional map file and RF-k and the administration data portion CFC and outputting these to a display unit 110; and a system control unit 115 having a structure which detects an issue whether or not update of the regional map file RF-k is necessary on the basis of an input operation by a user, determines a regional map file to be updated on the basis of positional data of the own vehicle when it is detected as being necessary, obtains data for update corresponding to the common map file and the regional map file RF-k thus determined after a process for navigation using the regional map file RF-k is stopped, and updates the common map file and the regional map file recorded in the data thus obtained.

According to this structure, the regional map file RF-k which should be updated is determined among the data for displaying map recorded in the HD on the basis of the positional data of own vehicle, and the regional map file and RF-k and the common map file CF are precedently updated. Accordingly, a regional map file RF-k in an area unrelated to the present position of the vehicle is not updated and only a regional map file related to the present position is subject to update. Accordingly, it becomes possible to reduce a time while the navigation apparatus is not used along with an update operation is reduced and prevent vexatious complication in an update operation.

Further, in the above structure, the system control unit 115 has the structure which specifies an area where the present position of vehicle exists on the basis of the positional data of own vehicle, and determines the regional map file RF-k corresponding to the area. Accordingly, the regional map file which is especially necessary for the user to be updated precedently is precedently updated. Therefore, convenience for the user is improved.

In a case (a) where the system control unit 115 determines only the regional map file RF-k, which corresponds to an area where the present position of vehicle is apart by a predetermined distance from its area border, as an object of update, a case (b) where the system control unit 115 determines a regional map file RF-k, which corresponds to an area existing ahead of a traveling direction of the vehicle when it is within a predetermined range of distance, or a case (c) where the system control unit 115 is adapted to employ a method of determining a regional map file corresponding to an area selected by a user when a present position of vehicle is within a predetermined distance range from an area border, a similar effect is obtainable. Further, a similar effect is obtainable in a case where the system control unit 115 employs a method of determining a regional map file RF-k corresponding to an area existing on a route thus set up as an object of renewal.

Furthermore, the navigation apparatus 100 according to the embodiment is constructed such that a regional map file RF-k other than the regional map file determined as an object of update is updated while using a vacant time of processing in the system control unit 115 after the regional map file RF-k determined as an object of update is completely updated. Accordingly, a regional map file corresponding to an area irrespective of the present position of the vehicle is updated, thereby enabling simplification of the update operation.

Furthermore, in such the structure, after the regional map file RF-k around a present position is completely updated, the system control unit 115 is constructed so as to generate a temporary file on an HD while using a vacant time of processing and replaces the regional map file RF-k to be updated with the temporary file, in updating the regional map file RF-k corresponding to an area other than a periphery of the present position. Therefore, it becomes possible to utilize the regional map file RF-k to be updated and use the navigation apparatus 100 during its update operation.

Furthermore, in updating the regional map file RF-k corresponding to an area other than a periphery of present position, a regional map file RF-k to be updated is determined on the basis of positional data of own vehicle. The system control unit 115 is constructed to obtain file data for update corresponding to the regional map file RF-k at a predetermined timing and renew a regional map file RF-k corresponding to an area other than the periphery of the present position recorded in the HD in use of file data thus obtained. Accordingly, it becomes possible to precedently update a regional map file which is not used to thereby enabling efficiency of processing.

Further, in the above embodiment, there has been described about a case where data for map display is updated in the navigation apparatus 100. However, data update is also possible by providing a similar process in a case of recording data for displaying map in a portable phone and updating the data thus recorded. In this case, it is sufficient to provide a GPS receiving portion 101 in the portable phone, obtain data for designating a present position of pedestrian, and precedently determine a regional map file RF-k to be updated on the basis of the data.

Further, in the above embodiment, there has been employed a structure that a DVD drive 106 is located on the navigation apparatus 100 and a partial update of a file for displaying map is conducted in use of the DVD drive 106. However, the files CF and RF-k may be downloaded from a server on the network, and a dedicated device may be separately provided for updating the files CF and RF-k which are recorded in the HD drive 105.

Furthermore, in the structure of updating the regional map file RF-k in use of the dedicated device, the HD drive 105 may be detached from a navigation apparatus 100 to updated data inside the HD with the dedicated device, and data may be updated in a state that the HD drive 105 is connected to the navigation apparatus 100.

Furthermore, although network data are provided in the common map file CF in the above embodiment, the network data may be administrated as another file. Furthermore, in the embodiment, it is constructed such that parcel administration information or the like for administrating map data is retained respectively in the common map file CF and the regional map file RF-k, it is possible to administrate parcel administration data asanotherfile. In this case, it is sufficient to simultaneously update a file containing information of such as the parcel administration information or the like along with update of the common map file CF and the regional map file RF-k.

Furthermore, in the above embodiment, there is employed a structure of updating the regional map file RF-k by utilizing a vacant time of processing for realizing various functions such as a route guide and a route setup in the system control unit 115. For example, during a time when a vehicle is stopped at an intersection, a processing in the navigation apparatus 100 may be stopped to thereby update the regional map file RF-k in use of such the time.

Further, in the above embodiment, a structure has been employed such that after a regional map file RF-k or the like of an area where a present position of vehicle belongs is updated, a rest of the regional map file RF-k is updated using a vacant time of process being carried out. However, when a vehicle enters into an adjacent area after passing through the above area border, a process being carried out is compellingly stopped to update a regional map file RF-k which corresponds to the entering area.

Furthermore, in the above embodiment, after the regional map file RF-k in the vicinity of the present position of vehicle is updated, a regional map file RF-k to be updated is determined from among unupdated regional map files RF-k, and the regional map file is precedently updated the regional map file which is not updated. However, in the process shown in Figure 4, when these unupdated regional map files RF-k are updated, it is specifically unnecessary to determine the reginal map file RF-k as an object of update. For example, it may be possible to determine that reading-out is completed as a time when update of all unupdated regional map files RF-k is completely updated in Step Sb8 while omitting the process in Step Sb5.

Further, in the above embodiment, there has been provided a structure that map data are managed in units of basic parcel, block , and block set. However, it is always unnecessary to manage the map data in these units.

Furthermore, in the above embodiment, a structure that data for displaying map are updated in the navigation apparatus, it is also possible to apply it to a case where data for displaying map recorded in a PC or the like are updated when proving a service for displaying map which is recorded in a PC or the like. In this case, a GPS receiver or the like is equipped in a portable phone, and positional data for designating a present position is obtained from the portable phone with an information processing apparatus such as PC. Then a regional map file RF-k to be updated may be determined on the basis of the positional data.

Furthermore, there has been employed a structure that data for displaying map are recorded in an HD of the navigation apparatus 100 and the regional map file RF-k of an area where a present position of vehicle belongs is the regional map file RF-k of an area where the present position of vehicle belongs is precedently updated in the above embodiment. However, a recording medium having a program stipulating operation of the process recorded in it and a computer for reading out the program may be provided to thereby perform a process similar to those described above by reading out the program with the computer.

## Claims

1. A map depiction device which generates map image data for displaying map and outputs the map image data thus generated to a display device in association with traveling of a movable body comprising:
a recording means having a map file containing map data provided for each of a plurality of areas, obtained by dividing an entire region to be displayed on a map, to thereby generate the map image data of an area corresponding to an own file, and a common file containing at least administration data for administrating the map data contained in the map file;
a present position data generating means for generating present position data indicative of at least a present position of the movable body;
a display control means for generating the map image data corresponding to a peripheral map of the present position, which is indicated by the present position data with use of the administration data and the map file, and outputting the map image data to the display device;
a detection means for detecting whether or not update of the map file is necessary;
a determining means for determining the map file to be updated on the basis of the present position data when it is detected such that the update of the map file is necessary; and
a file updating means which obtains the common file and the file data for update, corresponding to the map file determined by the determining means, and updates the common file and map file, which are recorded in the recording means, with use of the file data thus obtained after suspending process using the map file.

2. The map depiction device according to Claim 1, wherein
the determining means specifies the area where the present position of the movable body belongs on the basis of the present position data and determines the map file corresponding to at least the area as an object of update.

3. The map depiction device according to Claim 2, wherein
the determining means specifies the area where the present position of movable body belongs on the basis of the present position data, and simultaneously
(a) determines only a map file corresponding to the area in a case where the present position is apart from a border of the area by a predetermined distance, and meanwhile
(b) determines, as an object of update, a map file corresponding to the area and a map file corresponding to at least any one of the areas adjacent to the area through a border in a case where the present position is within a predetermined distance range from the border of the area.

4. The map depiction device according to Claim 3, wherein
the present position data generating means generates present position data designating a present position of the movable body and a traveling direction of the movable body, and
the determining means determines, as an object of update, a map file corresponding to the area where the present position belongs and a map file corresponding to the adjacent area existing ahead of the traveling direction of the movable body in a case where the present position is within a predetermined distance range from the border.

5. The map depiction device according to Claim 3, further comprising:
an input means for accepting input by a user, wherein
the determining means determines a map file corresponding to the adjacent area to be updated on the basis of input operation to the input means in a case where the present position is within a predetermined distance range from the border.

6. The map depiction device according to Claim 2, further comprising:
a set up means for setting up a destination of the movable body; and
a route setup means for setting up a route to the destination thus set up from the present position of the movable body, wherein
the determining means determines the map file corresponding to the area where the present position belongs and the map file corresponding to the area existing on the route thus set up as an object of update.

7. The map depiction device according to Claim 1, wherein
the file updating means obtains file data for update, which corresponds to the map file other than the map file thus determined, at a predetermined timing after completely updating the map file determined as an object of update, and updates other map files which are recorded in the recording means in use of the file data thus obtained.

8. The map depiction device according to Claim 7, wherein
the file updating means generates a temporary file on a recording medium using the file data thus obtained and replaces the map file to be updated with the temporary file in updating a map file other than the map file thus determined after completely updating the map file which is determined as an object of update by the determining means.

9. The map depiction device according to Claim 7, further comprising:
an auxiliary determining means which determines the map file to be updated on the basis of the present position data in updating a map file other than the map file thus determined after completing update of map file which is determined as the object of update by the determining means, wherein
the file updating means obtains file data for update corresponding to a map file determined by the auxiliary determining means at a predetermined timing and updates another map file which is recorded in the recording means using the file data thus obtained.

10. A navigation apparatus having a map depiction device which generates map image data for displaying a map and outputs the map image data thus generated to a display device in association with traveling of a movable body comprising:
a recording means having a map file, which contains map data provided for each of a plurality of areas obtained by dividing an entire region to be displayed on a map to thereby generate the map image data of an area corresponding to an own file, and a common file, which contains at least administration data for administrating the map data contained in the map file;
a present position data generating means for generating present position data indicative of at least a present position of the movable body;
a setup means for setting up a destination;
a route setup means for setting up a route from the present position of the movable body to the destination;
a display control means for generating the map image data so that route guide information indicative of a route which is set up along with a peripheral map of the present position, indicated by the present position data, is displayed with use of the administration data and the map file, and outputting the map image data to the display device in use of the administration data and the map file;
a detection means for detecting whether or not update of the map file is necessary;
a determining means for determining the map file to be updated on the basis of the present position data when it is detected such that the update of the map file is detected to be necessary; and
a file updating means which obtains the common file and the file data for update, corresponding to the map file determined by the determining means, and updates the common file and map file, which are recorded in the recording means, with use of the file data thus obtained after suspending process using the map file.

11. A file update method in a map depiction device which generates map image data for displaying a map and outputs the map image data thus generated and has a recording medium that records a map file which is provided area by area and obtained by dividing an entire area to be displayed in a map to a plurality of the areas and includes map data for generating the map image data corresponding to the area corresponding to an own file, and administration data for administrating the map data which are contained in the map file, comprising steps of:
a first step of detecting whether or not update of the map file is necessary in the map depiction device;
a second step of generating present position data designating at least the present position of the movable body in the map depiction device;
a third step of determining the map file to be updated on the basis of the present position of the vehicle in the map depiction device; and
a forth step of obtaining the common file and the file data for update, corresponding to the map file determined in the third step, and updates the common file and map file, which are recorded in the recording means, with use of the file data thus obtained after suspending process using the map file.

12. A file update program for updating a plurality of files that are recorded in an information recording medium, the plurality of files being a map file containing map data provided for each of a plurality of areas, obtained by dividing an entire region to be displayed on a map, and a common file containing at least administration data for administrating the map data contained in the map file, the file update program being provided to update the map file and the common file with a computer, tangibly demonstrating function comprising steps of:
a present position data generating means for generating present position data indicative of at least a present position of a movable body;
a detection means for detecting whether or not update of the map file is necessary;
a determining means for determining the map file to be updated on the basis of the present position data when it is detected such that the update of the map file is necessary; and
a file updating means which obtains file data for update determined by the common file and the file data for update, corresponding to the map file determined by the determining means, and updates the common file and map file, which are recorded in the information recording means, with use of the file data thus obtained after suspending process using the map file.

13. An information recording medium that can be read by a computer and has the file update program according to Claim 12.
